Europäisches Patentamt

European Patent Office

Office européen des brevets

(11) Publication number: **0 180 472**
A2

(12) **EUROPEAN PATENT APPLICATION**

(21) Application number: 85307886.3

(22) Date of filing: 31.10.85

(51) Int. Cl.⁴: **C 08 L 67/02,** C 08 L 51/04, C 08 L 69/00

(30) Priority: 31.10.84 US 666685

(43) Date of publication of application: 07.05.86 Bulletin 86/19

(84) Designated Contracting States: **BE DE FR GB IT NL**

(71) Applicant: **CELANESE CORPORATION, 1211 Avenue of the Americas, New York New York 10036 (US)**

(72) Inventor: **McNally, Donal, 62 Mountain Avenue, Chatham New Jersey (US)**
Inventor: **La Nieve, H. Leslie, 14 Roberts Road, Warren New Jersey (US)**

(74) Representative: **De Minvielle-Devaux, Ian Benedict Peter et al, CARPMAELS & RANSFORD 43, Bloomsbury Square, London WC1A 2RA (GB)**

(54) Novel thermoplastic polyester compositions having improved impact behaviour.

(57) Novel thermoplastic polyester compositions having improved impact behavior are produced. These compositions consist essentially of a blend of polybutylene terephthalate, having an intrinsic viscosity between about 0.4 and about 1.0 deciliters per gram as determined in orthochlorophenol at 25° C, with above 20% and up to 30% of a butadiene-based multiphase composite polymer.

/

## FIELD OF THE INVENTION

This invention relates to the production of thermoplastic polyester compositions.

## BACKGROUND OF THE INVENTION

Poly ($C_2$-$C_4$ alkylene terephthalate) such as polyethylene terephthalate (PET) or polybutylene terephthalate (PBT) are well known resins for a number of uses including molding applications. Such resins are frequently blended with various additives to improve properties such as impact strength, resistance to warping, flame resistance, and thermal stability. U.S. Patents 3,919,353; 4,096,202 and 4,034,013 describe certain impact modifiers which have been suggested for use with certain polyalkylene terephthalates. U.S. Patents 4,180,494; 4,195,134 and 4,393,153 describe combinations of certain impact modifiers and certain other compounds, e.g., polycarbonates, diepoxides and polyethylene terephthalate, respectively, for use in certain polyalkylene terephthalate molding compositions.

The search has continued, however, for polyalkylene terephthalate molding compositions having even further improved impact behavior. The present invention was made as a result of such a search.

## SUMMARY OF THE INVENTION

It is accordingly an object of the present invention to provide improved thermoplastic polyester compositions suitable for the production of molded articles as well as a process for producing molded articles from such compositions and molded articles of such compositions. As compared with known prior art compositions, molded articles of the present invention have a combination of desirable properties including improved impact behavior without sacrifice of other desirable properties.

In accordance with a broad aspect of the present invention, thermoplastic polyester compositions are provided which consist essentially of a blend of:

(a) at least about twenty weight percent polybutylene terephthalate having an intrinsic viscosity between about 0.4 and about 1.0 deciliters per gram (dl/g) as determined in orthochlorophenol at 25°C; and

(b) above 20 and up to 30 weight % based on polybutylene terephthalate of a butadiene-based multiphase composite polymer.

In a preferred aspect of the present invention, the thermoplastic polyester compositions consist essentially of at least about 60 weight percent (wt%) polybutylene terephthalate (PBT) and above 20 and up to 30 weight percent butadiene-based multiphase polymer, the latter being in sufficient amounts to achieve a ductile mode of failure as determined by ASTM D256. Further preferred aspects involve the use of polycarbonate resin and/or glass reinforcing fibers in amounts between about 1 and about 100 weight percent based on polybutylene terephthalate as well as preferred butadiene-based multiphase polymers as described below.

A central feature of the present invention is the surprising discovery that only certain amounts of butadiene-based multiphase polymer impart such improved impact behavior in terms of non-brittle failure in a notched Izod test (ASTM D526) to blends of relatively low initial intrinsic viscosity polybutylene terephthalate (PBT) and butadiene-based multiphase polymer.

Other objects, aspects and advantages of the present invention will become apparent to one skilled in the art in view of the following:

## DESCRIPTION OF THE PREFERRED EMBODIMENTS

As indicated above, polybutylene terephthalate (PBT) is especially suitable in amounts of at least about twenty percent, and in a preferred embodiment of the invention is present in amounts of at least about 60 weight percent of the thermoplastic polyester composition. An especially preferred polybutylene terephthalate has an intrinsic viscosity between about 0.4 and about 1.0 dl/g, as determined in orthochlorophenol at 25°C.

The butadiene-based multiphase composite polymer is present in compositions of the present invention in amounts above 20 and up to 30 weight percent based on polybutylene terephthalate. Most preferably, the butadiene-based composite polymer is present in an amount within this range and also sufficient to give a ductile yield in an ASTM-D526 notched Izod impact test.

The multiphase composite polymer, sometimes referred to as core/shell elastomer, used in compositions of the present invention has a butadiene-based core. Typically, it will have an elastomeric first phase or core of polybutadiene or polybutadiene/styrene and a thermoplastic final phase or shell of polymethylmethacrylate. It may also have an intermediate stage polymerized from styrene and a shell polymerized from methyl methacrylate and 1,3-butylene glycol dimethacrylate.

The most preferred butadiene-based multiphase polymers are methacrylated butadiene-styrene copolymer compositions sold commercially by Rohm & Haas under the tradenames KM-653 and KM-680 acryloids.

For further descriptions and examples of various butadiene-based multiphase polymers suitable for use in the present invention, reference may be had to the aforementioned U.S. Patents 3,919,353; 4,034,013; 4,180,494 and 4,393,153, the disclosures of which are incorporated herein by reference.

Compositions and products of the present invention may also contain about one to about 200, preferably about 60 to 120 weight percent based on polybutylene terephthalate of aromatic polycarbonate or poly(arylates) such bisphenol A-isophthalate-terephthalate-polyester. The effect of incorporating such polycarbonate or polyarylate is to develop impact behavior with lesser amounts of multiphase polymer. For further descriptions and examples of such polycarbonates and polyarylates, reference may be had to U.S. Patents 4,180,494 and 4,221,644, respectively, which are incorporated herein by reference.

Compositions and products of the present invention may also contain up to about 25 weight percent, more typically up to 10 percent, based on polybutylene terephthalate of suitable flame retardant additives such as decabromodiphenyl ether and antimony oxide, and may contain relatively minor amounts of other materials which do not unduly effect the desired characteristics of finished products. Such additional materials may, depending upon the particular compositions employed and products desired include for instance, colorants or lubricants. Where present such additional materials other than polycarbonate, flame retardants, fibers or filler, normally comprise not more than about 10 weight percent of the total molding composition or finished product.

-4-

Compositions and products of the present invention may also include reinforcing fibers or inert filler of conventional types and amounts. In a preferred embodiment between about 1 and about 100 weight percent based on polybutylene terephthalate of glass reinforcing fibers is present. Inert filler material where used is normally present in amounts between about one and about 100 weight percent based on polybutylene terephthalate and may include such materials as glass spheres, clay, silica, silicates, oxides, etc.

In preparing compositions of the present invention the various ingredients may be prepared by conventional methods and blended in any suitable manner such as by dry blending or melt blending, blending in extruders, heated rolls, or other types of mixers. Conventional master batching techniques may also be used. Suitable manufacture and blending techniques are well known in the art and need not be described in detail here.

Compositions according to the invention are especially useful in imparting improved impact behavior to PBT of relatively low initial or starting intrinsic viscosity, especially where the viscosity of the PBT is below 1.0 dl/g such as in the range of about 0.4-1.0 dl/g. This makes the present invention especially significant with respect to such PBT of relatively low intrinsic viscosity since, as is well known, PBT of higher intrinsic viscosity is generally more expensive to manufacture. Thus by use of the present invention it is frequently possible to employ for a given end use PBT compositions utilizing PBT of significantly lower intrinsic viscosity than would normally be considered acceptable in terms of impact behavior.

The following examples are intended to illustrate the invention without limiting the scope thereof. In the examples all quantities are given in terms of weight percent based on total compositions unless otherwise stated.

In order to evaluate impact behavior of the various compositions tested, samples of the compositions in question were injection molded to produce standard ASTM test specimens. Specimens were then tested for notched Izod impact strength in accordance with ASTM procedure D-256 (except not under controlled humidity conditions which should not materially affect the results).

Compositions tested as reported herein were prepared from several different PBT compositions as indicated in the examples. The compositions were compounded on a 2.5 inch Johnson extruder using the following conditions: temperature about 260°C, pressure 500-2000 psi, and screw RPM 75-150. In each case the pelletized extrudate was then molded on a reciprocating screw injection molding machine to provide test specimens.

In the examples the term "elastomer" designates butadiene-based multiphase composite polymers marketed by Rohm & Haas as their acryloids KM 653 and KM 680.

## EXAMPLES 1-4

For these examples a number of compositions were prepared utilizing polybutylene terephthalate (PBT) having an intrinsic viscosity of 1.0 dl/g and containing additional components as indicated in Table I below. These samples were tested for notched Izod impact strength as described above. The results of these tests are also shown in Table I.

7

## TABLE I

### NOTCHED IZOD IMPACT, FT. LB/IN.

| | % Elastomer (KM 653) | Notched Izod |
|---|---|---|
| Control | 0 | 0.55 |
| Comparative Run A | 5 | 0.86 |
| Comparative Run B | 10 | 1.19 |
| Comparative Run C | 15 | 1.49 |
| Comparative Run D | 20 | 2.20 |
| Example 1 | 25 | 2.22 |
| Example 2 | 30 | 8.46* |

| | % Elastomer (KM 680) | |
|---|---|---|
| Control | 0 | 0.55 |
| Comparative Run E | 10 | 1.26 |
| Comparative Run F | 15 | 1.82 |
| Comparative Run G | 20 | 3.60 |
| Example 3 | 25 | 3.60/10.08* |
| Example 4 | 30 | 13.18* |

* = DUCTILE FAILURE

The above examples show the unexpected advantage to be had by using above 20% and up to 30% of the butadiene-based multiphase polymer latex in accordance with the invention in terms of improving the impact behavior of PBT molding compositions. In particular, the desired improvement, non-brittle failure in a notched Izod test, is found above 20% and up to 30%

-7-

8

of the butadiene-based multiphase polymer. Two different behaviors are believed to be present – one a gradual toughening as multiphase polymer content increases and the other a super-toughening at a multiphase polymer content which changes the break failure mode to incomplete ductile tearing with considerable yielding in the vicinity of the tear. In the ASTM D526 testing procedure, when failure occurs in a ductile mode, the top of the specimen bar twists aside to allow passage of the impact hammer. The specimen tear length is less than 90% of the bar width, requiring classification as a "no break" under the ASTM procedure. It was shown that the partial tear did not come about as a result of slamming the impact hammer by obtaining similar failures (with similar values for the absorbed energy) in the 2,4 and 16 ft-lb. impact ranges. The numerical values obtained in the ductile tear failures are not properly comparable with those obtained in the brittle (break) failure mode. However, they are useful as a measure of the energy absorbed in the specimen.

While the invention has been described above with respect to certain embodiments thereof, it will be understood by those skilled in the art that various changes and modifications may be made without departing from the spirit and scope of the invention.

WHAT IS CLAIMED IS:                    9

1. A thermoplastic polyester having improved impact behavior and consisting essentially of a blend of:

(a) at least about 20 weight percent polybutylene terephthalate having an intrinsic viscosity between about 0.4 and about 1.0 dl/g; and

(b) above 20 and up to about 30 weight % based on polybutylene terephthalate of a butadiene-based multiphase composite polymer.

2. A composition according to claim 1 wherein the thermoplastic polyester composition includes at least about 60 weight percent polybutylene terephthalate.

3. A composition according to claim 1 further containing between about one and about 100 weight percent based on polybutylene terephthalate of glass reinforcing fibers.

4. A composition according to claim 1 further containing from about one to 200 weight percent based on polybutylene terephthalate of aromatic polycarbonate.

5. A composition according to claim 1 further containing from about one to 200 weight percent based on polybutylene terephthalate of polyarylate.

6. A composition according to claim 1 wherein the butadiene-based multiphase polymer is present in an amount sufficient to achieve a ductile mode of failure as determined by ASTM D526.

7. A composition according to claim 1 wherein the butadiene-based multiphase polymer has an elastomeric core of polybutadiene or polybutadiene/styrene and a thermoplastic shell of polymethylmethacrylate.

8. A composition according to claim 1 further containing between about one and about 100 weight percent based on polybutylene terephthalate of inert filler.

9. A composition according to claim 1 further comprising up to twenty-five weight percent based on polybutylene terephthalate of flame retardant additive.

10. A thermoplastic polyester having improved impact behavior and consisting essentially of a blend of:

    (a)    at least about 60 weight percent polybutylene terephthalate having an intrinsic viscosity between about 0.4 and about 1.0 dl/g; and

    (b)    above 20 and up to about 30 weight % based on polybutylene terephthalate of a butadiene-based multiphase composite polymer, the butadiene-based multiphase polymer present in an amount sufficient to achieve a ductile mode of failure as determined by ASTM D526, and wherein the butadiene-based multiphase polymer has an elastomeric core of polybutadiene or polybutadiene/styrene and a thermoplastic shell of polymethylmethacrylate.

11. A composition according to claim 10 further containing between about one and about 100 weight percent based on polybutylene terephthalate of glass reinforcing fibers.

12. A composition according to claim 10 further containing from about one to 200 weight percent based on polybutylene terephthalate of aromatic polycarbonate.

13. A composition according to claim 10 further containing from about one to 200 weight percent based on polybutylene terephthalate of polyarylate.